# EUROPEAN PATENT SPECIFICATION

(11) **EP 1 713 846 B1**
(45) Date of publication and mention of the grant of the patent: **18.07.2007**
(21) Application number: 04812417.6
(22) Date of filing: 29.11.2004
(51) Int. Cl.: C08G 18/28, C08G 18/08, C08G 18/79, C04B 26/10

(54) **STAIN RESISTANT GROUT**
FLECKENUNEMPFINDLICHE FUGENMASSE
COULIS RESISTANT AUX SALISSURES

(30) Priority: 30.12.2003 US 748739
(43) Date of publication of application: 25.10.2006
(73) Proprietor: 3M Innovative Properties Company, St. Paul, MN 55133-3427 (US)
(72) Inventor: COGGIO, William, D., Saint Paul, Minnesota 55133-3427 (US); FAN, Wayne, W., Saint Paul, Minnesota 55133-3427 (US)
(74) Representative: Voortmans, Gilbert J.L.
(86) International application number: PCT/US2004/039885
(87) International publication number: WO 2005/066236

(56) References cited:
- EP-A- 1 262 464
- WO-A-03/082997

## Description

### Field of Invention

The present invention relates to stain-resistant polymeric grout.

### Background of Invention

Polymeric grouts have become well known; illustrative examples are disclosed in U.S. Patent Nos. 4,616,050, 4,472,540, and 3,859,233.

Known polymeric grout formulations are subject to staining. Currently grout protective sealers are widely used to protect grout from staining. However, this entails an additional sealing procedure which in many cases is time consuming. Moreover, the ceramic tiles do not need any coating, therefore it is difficult to coat only the narrow grout. The need exists for improved grout formulations that will provide increased stain resistance and require no additional protective coating.

### Summary of Invention

The present invention provides stain-resistant polymeric grout.

In brief summary, the invention provides polymeric grout formulations that comprise an additive comprising one or more urethane oligomers of at least two polymerized units. The oligomers comprise the reaction product of:
(a) one or more polyfunctional isocyanate compounds;
(b) one or more polyols;
(c) one or more monoalcohols selected from the group consisting of fluorocarbon monoalcohols; and
(d) one or more silanes of the following formula:

   X-R¹-Si - (Y)₃

   wherein
   X is -NH₂; -SH; -OH; or -NRH, where R is selected from the group consisting of phenyl, straight and branched aliphatic, alicyclic, and aliphatic ester groups;
   R¹ is an alkylene, heteroalkylene, aralkylene, or heteroaralkylene group; and
   each Y is independently a hydroxyl; a hydrolyzable moiety selected from the group consisting of alkoxy, acyloxy, heteroalkyoxy, heteroacyloxy, halo, and oxime; or a non-hydrolyzable moiety selected from the group consisting of phenyl, alicyclic, straight-chain aliphatic, and branched-chain aliphatic, wherein at least one Y is a hydrolyzable moiety.

In another aspect, the present invention provides polymeric grout compositions comprising an additive comprising an oligomer comprising at least two polymerized units, each said polymerized unit comprising a urethane group, and said oligomer being substituted with (i) one or more covalently bonded perfluoroalkyl groups, or one or more covalently bonded perfluoroheteroalkyl groups, and (ii) one or more covalently bonded silyl groups.

Grout compositions of the invention exhibit improved water-repellency, oil-repellency, and stain-resistance.

### Definitions

Unless otherwise stated, the following terms used in the specification and claims have the following meanings:
"Acyloxy" means a radical --OC(O)R where R is, alkyl, alkenyl, and cycloalkyl, for example, acetoxy, 3,3,3-trifluoroacetoxy, propionyloxy.
"Alkoxy" means a radical --OR where R is an alkyl group as defined below, for example, methoxy, ethoxy, propoxy, butoxy.
"Alkyl" means a linear saturated monovalent hydrocarbon radical having from one to twelve carbon atoms or a branched saturated monovalent hydrocarbon radical having from three to twelve carbon atoms, for example, methyl, ethyl, 1-propyl, 2-propyl, pentyl.
"Alkylene" means a linear saturated divalent hydrocarbon radical having from one to twelve carbon atoms or a branched saturated divalent hydrocarbon radical having from three to twelve carbon atoms, for example, methylene, ethylene, propylene, 2-methylpropylene, pentylene, hexylene.
"Aralkylene" means an alkylene radical defined above with an aromatic group attached to the alkylene radical, for example, benzyl, pyridylmethyl, 1-naphthylethyl.
"Fluorocarbon monoalcohol" means a compound having one hydroxyl group and a perfluoroalkyl or a perfluoroheteralkyl group, for example, C₄F₉SO₂N(CH₃)CH₂CH₂OH, C₄F₉CH₂CH₂OH, C₂F₅O(C₂F₄O)₃CF₂CONHC₂H₄OH, c-C₆F₁₁CH₂OH.
"Halo" means fluoro, chloro, bromo, or iodo, preferably fluoro and chloro.
"Hard substrate" means any rigid material that maintains its shape, for example, glass, ceramic, concrete, natural stone, wood, metals, plastics.
"Heteroacyloxy" has essentially the meaning given above for acyloxy except that one or more heteroatoms (for example, oxygen, sulfur, and/or nitrogen) can be present in the R group and the total number of carbon atoms present can be up to 50, for example, CH₃CH₂OCH₂CH₂C(O)O-, C₄H₉OCH₂CH₂OCH₂CH₂C(O)O-, CH₃O(CH₂CH₂O)ₙCH₂CH₂C(O)O-.
"Heteroalkoxy" has essentially the meaning given above for alkoxy except that one or more heteroatoms (for example, oxygen, sulfur, and/or nitrogen) can be present in the alkyl chain and the total number of carbon atoms present can be up to 50, for example, CH₃CH₂OCH₂CH₂O-, C₄H₉OCH₂CH₂OCH₂CH₂O-, CH₃O(CH₂CH₂O)ₙH.
"Heteroalkyl" has essentially the meaning given above for alkyl except that one or more heteroatoms (for example, oxygen, sulfur, and/or nitrogen) can be present in the alkyl chain, these heteroatoms being separated from each other by at least one carbon, for example, CH₃CH₂OCH₂CH₂-, CH₃CH₂OCH₂CH₂OCH(CH₃)CH₂-, C₄F₉CH₂CH₂SCH₂CH₂-.
"Heteroalkylene" has essentially the meaning given above for alkylene except that one or more heteroatoms (for example, oxygen, sulfur, and/or nitrogen) can be present in the alkylene chain, these heteroatoms being separated from each other by at least one carbon, for example, -CH₂OCH₂O-, -CH₂CH₂OCH₂CH₂-, -CH₂CH₂N(CH₃)CH₂CH₂-, - CH₂CH₂SCH₂CH₂-.
"Heteroaralkylene" means an aralkylene radical defined above except that catenated oxygen, sulfur, and/or nitrogen atoms can be present, for example, phenyleneoxymethyl, phenyleneoxyethyl, benzyleneoxymethyl.
"Long-chain hydrocarbon monoalcohol" means a compound having one hydroxyl group and a long chain hydrocarbon group having 10 to 18 carbons which can be saturated, unsaturated, or aromatic, and can optionally be substituted with one or more chlorine, bromine, trifluoromethyl, or phenyl groups, for example, CH₃(CH₂)₁₀CH₂OH, CH₃(CH₂)₁₄CH₂OH.
"Oligomer" means a polymer molecule consisting of only a few (for example, from 2 to 20) repeat (polymerized) units.
"Perfluoroalkyl" has essentially the meaning given above for "alkyl" except that all or essentially all of the hydrogen atoms of the alkyl radical are replaced by fluorine atoms and the number of carbon atoms is preferably from 2 to 6, for example, perfluoropropyl, perfluorobutyl, perfluorohexyl.
"Perfluoroalkylene" has essentially the meaning given above for "alkylene" except that all or essentially all of the hydrogen atoms of the alkylene radical are replaced by fluorine atoms, for example, perfluoropropylene, perfluorobutylene, perfluorooctylene.
"Perfluoroheteroalkyl" has essentially the meaning given above for "heteroalkyl" except that all or essentially all of the hydrogen atoms of the heteroalkyl radical are replaced by fluorine atoms and the number of carbon atoms is from 3 to 100, for example, CF₃CF₂OCF₂CF₂-, CF₃CF₂O(CF₂CF₂O)₃CF₂CF₂-, C₃F₇O(CF(CF₃)CF₂O)ₘCF(CF₃)CF₂- where m is from 10 to 30.
"Perfluoroheteroalkylene" has essentially the meaning given above for "heteroalkylene" except that all or essentially all of the hydrogen atoms of the heteroalkylene radical are replaced by fluorine atoms, and the number of carbon atoms is from 3 to 100, for example, -CF₂OCF₂-, -CF₂O(CF₂O)ₙ(CF₂CF₂O)ₘCF₂-.
"Perfluorinated group" means an organic group wherein all or essentially all of the carbon bonded hydrogen atoms are replaced with fluorine atoms, for example, perfluoroalkyl, perfluoroheteroalkyl.
"Polyfunctional isocyanate compound" means a compound containing two or more isocyanate radicals, -NCO, attached to a multi-valent organic group, for example, hexamethylene diisocyanate, the biuret and iscyanurate of hexamethylene diisocyanate.
"Polyol" means an organic compound or polymer with an average of at least 2 primary or secondary hydroxyl groups per molecule, for example, ethylene glycol, propylene glycol, 1,6-hexanediol.
"Polyalkylsiloxane diol" means a molecule having two hydroxyl groups and a repeating unit with the structure, -(Si(R)₂O)-, for example, HOR[Si(CH₃)₂O]ₙSiROH, wherein each R is independently straight- or branched-chain alkyl.
"Polyarylsiloxane diol" means a molecule having two hydroxyl groups and a repeating unit with the structure, -(Si(Ar)₂O)-, for example, HOR[Si(C₆H₅)₂O]SiROH, wherein each R is independently straight- or branched-chain alkyl.
"Repellency" is a measure of a treated substrate's resistance to wetting by oil and/or water and/or adhesion of particulate soil. Repellency can be measured by the test methods described herein.
"Resistance," in the context of soiling or staining, is a measure of the treated substrate's ability to avoid staining and/or soiling when contacted by stain or soil respectively.
"Release" is a measure of the treated substrate's ability to have soil and/or stain removed by cleaning or laundering.
"Silane group" means a group comprising silicon to which at least one hydrolyzable group is bonded, for example, -Si(OCH₃)₃, -Si(OOCCH₃)₂CH₃, -Si(Cl)₃.

### Detailed Description of Illustrative Embodiments

### Additives

The additives for polymeric grouts of the present invention comprise one or more stabilized urethane oligomers having at least two polymerized units. The polymerized units are selected from the group consisting of fluorine-containing urethane oligomers. This oligomer comprises the reaction product of (a) one or more polyfunctional isocyanate compounds, (b) one or more polyols, (c) one or more monoalcohols selected from the group consisting of fluorochemical monoalcohols, (d) one or more silanes, and optionally (e) one or more stabilizers selected from the group consisting of UV absorbers comprising one or more isocyanate-reactive groups and HALS comprising one or more isocyanate-reactive groups. Preferably, the oligomer further comprises the reaction product of (f) one or more water-solubilizing compounds comprising one or more water-solubilizing groups and at least one isocyanate-reactive hydrogen containing group.

The silanes are of the following formula:

X-R¹-Si - (Y)₃

wherein:
X is -NH₂; -SH; -OH; or -NRH, where R is a phenyl, straight or branched aliphatic, alicyclic, or aliphatic ester group;
R¹ is an alkylene, heteroalkylene, aralkylene, or heteroaralkylene group; and
each Y is independently a hydroxyl; a hydrolyzable moiety selected from the group consisting of alkoxy, acyloxy, heteroalkyoxy, heteroacyloxy, halo, and oxime; or a non-hydrolyzable moiety selected from the group consisting of phenyl, alicyclic, straight-chain aliphatic, and branched-chain aliphatic, wherein at least one Y is a hydrolyzable moiety.

The oligomer comprises at least two polymerized units. Each polymerized unit comprises a urethane group that is derived or derivable from the reaction of at least one polyfunctional isocyanate compound and at least one polyol. The oligomer comprises one or more of the following covalently bonded to the polymerized units of the oligomer: (i) one or more perfluoroalkyl groups, one or more perfluoroheteroalkyl groups; (ii) one or more silyl groups; and (iii) one or more stabilizer moieties. These groups can be pendant from the backbone or the polymerized unit or terminal.

The oligomer can further comprise one or more covalently bonded water-solubilizing groups, these solubilizing groups independently being pendant from the polymerized unit or terminal.

In one preferred embodiment, additives of the present invention comprise a mixture of urethane molecules arising from the reaction of (a) one or more polyfunctional isocyanate compounds, (b) one or more polyols, (c) one or more fluorochemical monoalcohols, (d) one or more silanes as described above, and optionally (e) one or more stabilizers comprising one or more isocyanate-reactive groups.

In another preferred embodiment, the chemical composition of the present invention comprises a mixture of urethane molecules arising from the reaction of (a) one or more polyfunctional isocyanate compounds, (b) one or more polyols, (c) one or more fluorochemical monoalcohols, (d) one or more silanes as described above, (e) (optionally) one or more stabilizers selected from the group consisting of UV absorbers comprising one or more isocyanate-reactive groups and HALS comprising one or more isocyanate-reactive groups, and (f) one or more water-solubilizing compounds comprising one or more water-solubilizing groups and at least one isocyanate-reactive hydrogen containing group.

Water-solubilizing compounds of the present invention can be represented in general by "W-R¹-X," wherein W is one or more water-solubilizing groups, X is an isocyanate-reactive group such as -NH₂; -SH; -OH; or NRH, where R is a phenyl, straight or branched aliphatic, alicyclic, or aliphatic ester group; and R¹ is an alkylene, heteroalkylene, aralkylene, or heteroaralkylene group.

The composition can further contain fluorine-containing urethane compounds having fewer than two polymerized units. The mixture of urethane molecules preferably comprises urethane molecules having a varying number of polymerized units, including one, two, and more polymerized units. This mixture of urethane molecules comprising a varying number of polymerized units allows simple blending of the above components in preparing the fluorochemical composition.

Preferred classes of urethane oligomers that can be present are represented by the following general formulas:

R_{f}ZR² -O(-CONH-Q(A)ₘ-NHCO-OR³O-)ₙCONH-Q(A)-NHCO-X'R¹Si(Y)₃

R_{f}ZR²-O(-CONH-Q(A)ₘ-NHCO-OR³O-)ₙCONHR¹ Si(Y)₃

R⁴-O(-CONH-Q(A)ₘ NHCO-OR³O-)ₙCONH-Q(A)-NHCO-X'R¹Si(Y)₃

R⁴-O(-CONH-Q(A)ₘ-NHCO-OR³O-)ₙCONHR¹Si(Y)₃

wherein:
R_{f}ZR²- is a residue of at least one of the fluorochemical monoalcohols;
R_{f} is a perfluoroalkyl group having 3 to 8 carbon atoms, or a perfluoroheteroalkyl group having 3 to 50 carbon atoms;
Z is a covalent bond, sulfonamido (-SO₂NR-), or carboxamido (-CONR-) where R is hydrogen or alkyl;
R¹ is an alkylene, heteroalkylene, aralkylene, or heteroaralkylene group;
R² is a divalent straight- or branched-chain alkylene, cycloalkylene, or heteroalkylene group of 1 to 14 carbon atoms (preferably, 1 to 8 carbon atoms; more preferably, 1 to 4 carbon atoms; most preferably, two carbon atoms; and preferably, R² is alkylene or heteroalkylene of 1 to 14 carbon atoms);
Q is a multi-valent organic group which is a residue of the polyfunctional isocyanate compound;
R³ is a divalent organic group which is a residue of the polyol and can be optionally substituted with or contain (i) water-solubilizing groups, (ii) perfluorinated groups or (III) silane groups;
X' is -O-, -S-, or -N(R)-, wherein R is hydrogen or alkyl;
R⁴ is an optionally substituted long-chain hydrocarbon derived from the long-chain hydrocarbon monoalcohol;
each Y is independently a hydroxy; a hydrolyzable moiety selected from the group consisting of alkoxy, acyloxy, heteroalkoxy, heteroacyloxy, halo, and oxime; or a non-hydrolyzable moiety selected from the group consisting of phenyl, alicyclic, straight-chain aliphatic, and branched-chain aliphatic, wherein at least one Y is a hydrolyzable moiety;
A is a pendent group derived from a stabilizer or a water solubilizing group, provided that at least one A is a stabilizer;
m is an integer from 0 to 2; and
n, which is the number of polymerized units, is an integer from 2 to 10.

Polyfunctional isocyanate groups that are useful in the present invention comprise isocyanate radicals attached to the multi-valent organic group, Q, which can comprise a multi-valent aliphatic, alicyclic, or aromatic moiety; or a multi-valent aliphatic, alicyclic or aromatic moiety attached to a biuret, an isocyanurate, or a uretdione, or mixtures thereof. Preferred polyfunctional isocyanate compounds contain two or three -NCO radicals. Compounds containing two - NCO radicals are comprised of divalent aliphatic, alicyclic, araliphatic, or aromatic moieties to which the -NCO radicals are attached. Preferred compounds containing three -NCO radicals are comprised of isocyanatoaliphatic, isocyanatoalicyclic, or isocyanatoaromatic, monovalent moieties, which are attached to a biuret or an isocyanurate.

Representative examples of suitable polyfunctional isocyanate compounds include isocyanate functional derivatives of the polyfunctional isocyanate compounds as defined herein. Examples of derivatives include, for example, those selected from the group consisting of ureas, biurets, allophanates, dimers and trimers (such as uretdiones and isocyanurates) of isocyanate compounds, and mixtures thereof. Any suitable organic polyisocyanate, such as an aliphatic, alicyclic, araliphatic, or aromatic polyisocyanate, can be used either singly or in mixtures of two or more.

The aliphatic polyfunctional isocyanate compounds generally provide better light stability than the aromatic compounds. Aromatic polyfunctional isocyanate compounds, on the other hand, are generally more economical and reactive toward polyols and other poly(active hydrogen) compounds than are aliphatic polyfunctional isocyanate compounds. Suitable aromatic polyfunctional isocyanate compounds include, for example, those selected from the group consisting of 2,4-toluene diisocyanate (TDI), 2,6-toluene diisocyanate, an adduct of TDI with trimethylolpropane (available as DESMODUR^{™} CB from Bayer Corporation, Pittsburgh, PA), the isocyanurate trimer of TDI (available as DESMODUR^{™} IL from Bayer Corporation, Pittsburgh, PA), diphenylmethane 4,4'-diisocyanate (MDI), diphenylmethane 2,4'-diisocyanate, 1,5-diisocyanato-naphthalene, 1,4-phenylene diisocyanate, 1,3-phenylene diisocyanate, 1-methyoxy-2,4-phenylene diisocyanate, 1-chlorophenyl-2,4-diisocyanate, and mixtures thereof.

Examples of useful alicyclic polyfunctional isocyanate compounds include, for example, those selected from the group consisting of dicyclohexylmethane diisocyanate (H₁₂MDI, commercially available as DESMODUR^{™} W, available from Bayer Corporation, Pittsburgh, PA), 4,4'-isopropyl-bis(cyclohexylisocyanate), isophorone diisocyanate (IPDI), cyclobutane-1,3-diisocyanate, cyclohexane 1,3-diisocyanate, cyclohexane 1,4-diisocyanate (CHDI), 1,4-cyclohexanebis(methylene isocyanate) (BDI), 1,3-bis(isocyanatomethyl)cyclohexane (H₆XDI), 3-isocyanatomethyl-3,5,5-trimethylcyclohexyl isocyanate, and mixtures thereof.

Examples of useful aliphatic polyfunctional isocyanate compounds include for example, those selected from the group consisting of 1,4-tetramethylene diisocyanate, hexamethylene 1,4-diisocyanate, hexamethylene 1,6-diisocyanate (HDI), 1,12-dodecane diisocyanate, 2,2,4-trimethyl-hexamethylene diisocyanate (TMDI), 2,4,4-trimethyl-hexamethylene diisocyanate (TMDI), 2-methyl-1,5-pentamethylene diisocyanate, dimer diisocyanate, the urea of hexamethylene diisocyanate, the biuret of hexamethylene 1,6-diisocyanate (HDI) (available as DESMODUR^{™} N-100 and N-3200 from Bayer Corporation, Pittsburgh, PA), the isocyanurate of HDI (available as DESMODUR^{™} N-3300 and DESMODUR^{™} N-3600 from Bayer Corporation, Pittsburgh, PA), a blend of the isocyanurate of HDI and the uretdione of HDI (available as DESMODUR^{™} N-3400 available from Bayer Corporation, Pittsburgh, PA), and mixtures thereof.

Examples of useful araliphatic polyisocyanates include, for example, those selected from the group consisting of m-tetramethyl xylylene diisocyanate (m-TMXDI), p-tetramethyl xylylene diisocyanate (p-TMXDI), 1,4-xylylene diisocyanate (XDI), 1,3-xylylene diisocyanate, p-(1-isocyanatoethyl)-phenyl isocyanate, m-(3-isocyanatobutyl)-phenyl isocyanate, 4-(2-isocyanatocyclohexyl-methyl)-phenyl isocyanate, and mixtures thereof.

Preferred polyisocyanates, in general, include those selected from the group consisting of hexamethylene 1,6-diisocyanate (HDI), 1,12-dodecane diisocyanate isophorone diisocyanate, toluene diisocyanate, dicyclohexylmethane 4,4'-diisocyanate, MDI, derivatives of all the aforementioned, including DESMODUR^{™} N-100, N-3200, N-3300, N-3400, N-3600, and mixtures thereof.

Suitable commercially available polyfunctional isocyanates are exemplified by DESMODUR^{™} N-3200, DESMODUR^{™} N-3300, DESMODUR^{™} N-3400, DESMODUR^{™} N-3600, DESMODUR^{™} H (HDI), DESMODUR^{™} W (bis[4-isocyanatocyclohexyl]methane), MONDUR^{™} M (4,4'-diisocyanatodiphenylmethane), MONDUR^{™} TDS (98% toluene 2,4-diisocyanate), MONDUR^{™} TD-80 (a mixture of 80% 2,4 and 20% 2,6-toluene diisocyanate isomers), and DESMODUR^{™} N-100, each available from Bayer Corporation, Pittsburgh, PA.

Other useful triisocyanates are those obtained by reacting three moles of a diisocyanate with one mole of a triol. For example, toluene diisocyanate, 3-isocyanatomethyl-3,4,4-trimethylcyclohexyl isocyanate, or m-tetramethylxylene diisocyanate can be reacted with 1,1,1-tris(hydroxymethyl)propane to form triisocyanates. The product from the reaction with m-tetramethylxylene diisocyanate is commercially available as CYTHANE^{™} 3160 (American Cyanamid, Stamford, Conn.).

Polyols suitable for use in preparing additives of the present invention include those organic polyols that have an average hydroxyl functionality of at least 2 (preferably, 2 to 5; more preferably, 2 to 3; most preferably, about 2, as diols are most preferred). The hydroxyl groups can be primary or secondary, with primary hydroxyl groups being preferred for their greater reactivity. Mixtures of diols with polyols that have an average hydroxyl functionality of 2.5 to 5 (preferably, 3 to 4; more preferably, about 3) can also be used. It is preferred that such mixtures contain no more than 20 percent by weight of such higher polyols, more preferably no more than 10 percent, and most preferably no more than 5 percent. Preferred mixtures are mixtures of diols and triols.

Suitable polyols include those that comprise at least one aliphatic, heteroaliphatic, alicyclic, heteroalicyclic, aromatic, heteroaromatic, or polymeric moiety. The polyols may be fluorinated polyols, such as perfluroopolyether diols. Preferred polyols are aliphatic or polymeric polyols that contain hydroxyl groups as terminal groups or as groups that are pendant from the backbone chain of the polyol.

The molecular weight (that is, the number average molecular weight) of hydrocarbon polyols can generally vary from 60 to 2000, preferably, from 60 to 1000, more preferably, from 60 to 500, most preferably, from 60 to 300. The equivalent weight (that is, the number average equivalent weight) of hydrocarbon polyols generally can be in the range of 30 to 1000, preferably, from 30 to 500, more preferably, from 30 to 250. Polyols of higher equivalent weight can have a tendency to reduce the stain-release properties provided by the chemical compositions of the present invention unless the polyol contains an R_{f} group or the polyol comprises a perfluoropolyether. If the polyol comprises a perfluoropolyether, it can have a molecular weight as high as approximately 7000 and can still provide adequate stain-release properties.

When the polyols of the present invention are diols, the diols can be substituted with or contain other groups. Thus, a preferred diol is selected from the group consisting of a branched- or straight-chain hydrocarbon diol, a diol containing at least one water solubilizing group, a fluorinated diol comprising a monovalent or divalent perfluorinated group, a diol comprising a silane group, a polyalkylsiloxane diol, a polyarylsiloxane diol, and mixtures thereof. Solubilizing groups include carboxylate, sulfate, sulfonate, phosphate, phosphonate, ammonium, quaternary ammonium.

Perfluorinated monovalent groups (R_{f}) can be perfluoroalkyl and perfluoroheteroalkyl, and perfluorinated divalent groups can be perfluoroalkylene and perfluoroheteroalkylene. Perfluoroalkyl groups are preferred, with perfluoroalkyl groups having from 2 to 6 carbon atoms being more preferred and perfluoroalkyl groups having 4 carbon atoms being most preferred. Another embodiment comprises perfluoroheteroalkyl groups having 6 to 50 carbon atoms. Perfluorinated divalent groups are preferably perfluoroheteroalkylene groups. Perfluoroheteroalkylene groups are preferably perfluoropolyether groups having from 3 to 50 carbon atoms.

When the diol further comprise a silane group, the silane groups of the diol can contain one, two, or three hydrolyzable groups on the silicon atom. Hydrolyzable groups are as defined below. Polyalkylsiloxane diols include, for example, hydroxyalkyl terminated polydimethyl siloxanes. Polyarylsiloxane diols are essentially the same as the polyalkylsiloxanes with some or all of the methyl groups replaced with phenyl groups, such as hydroxyalkyl terminated polydiphenylsiloxane and hydroxyalkyl terminated dimethyl-diphenylsiloxane copolymer.

Representative examples of suitable non-polymeric polyols include alkylene glycols, polyhydroxyalkanes, and other polyhydroxy compounds. The alkylene glycols include, for example, 1,2-ethanediol; 1,2-propanediol; 3-chloro-1,2-propanediol; 1,3-propanediol; 1,3-butanediol; 1,4-butanediol; 2-methyl-1,3-propanediol; 2,2-dimethyl-1,3-propanediol (neopentylglycol); 2-ethyl-1,3-propanediol; 2,2-diethyl-1,3-propanediol; 1,5-pentanediol; 2-ethyl-1,3-pentanediol; 2,2,4-trimethyl-1,3-pentanediol; 3-methyl-1,5-pentanediol; 1,2-hexanediol; 1,5-hexanediol; 1,6-hexanediol; 2-ethyl-1,6-hexanediol; bis(hydroxymethyl)cyclohexane; 1,8-octanediol; bicyclo-octanediol; 1,10-decanediol; tricyclo-decanediol; norbomanediol; and 1,18-dihydroxyoctadecane.

The polyhydroxyalkanes include, for example, glycerine; trimethylolethane; trimethylolpropane; 2-ethyl-2-(hydroxymethyl)-1,3-propanediol; 1,2,6-hexanetriol; pentaerythritol; quinitol; mannitol; and sorbitol.

Other polyhydroxy compounds include, for example, di(ethylene glycol); tri(ethylene glycol); tetra(ethylene glycol); tetramethylene glycol; dipropylene glycol; diisopropylene glycol; tripropylene glycol; bis(hydroxymethyl)propionic acid; N,N-bis(2-hydroxyethyl)-3-aminopropyltriethoxysilane; bicine; N-bis(2-hydroxyethyl) Perfluorobutylsulfonamide; 1,1 1-(3,6-dioxaundecane)diol; 1,14-(3,6,9,12-tetraoxatetradecane)diol; 1,8-(3,6-dioxa-2,5,8-trimethyloctane)diol; 1,14-(5,10-dioxatetradecane)diol; castor oil; 2-butyne-1,4-diol; N,N-bis(hydroxyethyl)benzamide; 4,4'-bis(hydroxymethyl)diphenylsulfone; 1,4-benzenedimethanol; 1,3-bis(2-hydroxyethyoxy)benzene; 1,2-dihydroxybenzene; resorcinol; 1,4-dihydroxybenzene; 3,5-dihydroxybenzoic acid; 2,6-dihydroxybenzoic acid; 2,5-dihydroxybenzoic acid; 2,4-dihydroxybenzoic acid; 1,6-dihydroxynaphthalene; 2,6-dihydroxynaphthalene; 2,5-dihydroxynaphthalene; 2,7-dihydroxynaphthalene; 2,2'-biphenol; 4,4'-biphenol; 1,8-dihydroxybiphenyl; 2,4-dihydroxy-6-methyl-pyrimidine; 4,6-dihydroxypyrimidine; 3,6-dihydroxypyridazine; bisphenol A; 4,4'-ethylidenebisphenol; 4,4'-isopropylidenebis(2,6-dimethylphenol); bis(4-hydroxyphenyl)methane; 1,1-bis(4-hydroxyphenyl)-1-phenylethane (bisphenol C); 1,4-bis(2-hydroxyethyl)piperazine; bis(4-hydroxyphenyl) ether; as well as other aliphatic, heteroaliphatic, saturated alicyclic, aromatic, saturated heteroalicyclic, and heteroaromatic polyols, and mixtures thereof.

Representative examples of useful polymeric polyols include polyoxyethylene, polyoxypropylene, and ethylene oxide-terminated polypropylene glycols and triols of molecular weights from 200 to 2000, corresponding to equivalent weights of 100 to 1000 for the diols or 70 to 700 for triols; polytetramethylene glycols of varying molecular weight; polydialkylsiloxane diols of varying molecular weight; hydroxy-terminated polyesters and hydroxy-terminated polylactones (for example, polycaprolactone polyols); hydroxy-terminated polyalkadienes (for example, hydroxyl-terminated polybutadienes). Mixtures of polymeric polyols can be used if desired.

Useful commercially available polymeric polyols include CARBOWAX^{™} poly(ethylene glycol) materials in the number average molecular weight (Mₙ) range of from 200 to 2000 (available from Union Carbide Corp., Danbury, CT); poly(propylene glycol) materials such as PPG-425 (available from Lyondell Chemical Company, Houston, TX); block copolymers of poly(ethylene glycol) and poly(propylene glycol) such as PLURONIC^{™} L31 (available from BASF Corporation, Mount Olive, NJ); bisphenol A ethoxylate, Bisphenol A propyloxylate, and Bisphenol A propoxylate/ethoxylate (available from Sigma-Aldrich, Milwaukee, WI); polytetramethylene ether glycols such as POLYMEG^{™} 650 and 1000 (available from Quaker Oats Company, Chicago, IL) and the TERATHANE^{™} polyols (available from E.I. duPont de Nemours, Wilmington, DE); hydroxyl-terminated polybutadiene resins such as the POLY BD^{™} materials (available from Elf Atochem, Philadelphia, PA); the "PeP" series (available from Wyandotte Chemicals Corporation, Wyandotte, MI) of polyoxyalkylene tetrols having secondary hydroxyl groups, for example, "PeP" 450, 550, and 650; polycaprolactone polyols with Mₙ in the range of 200 to 2000 such as TONE^{™} 0201, 0210, 0301, and 0310 (available from Union Carbide Corp., Danbury, CT); "PARAPLEX^{™} U-148" (available from Rohm and Haas Co., Philadelphia, PA), an aliphatic polyester diol; polyester polyols such as the MULTRON^{™} poly(ethyleneadipate)polyols (available from Mobay Chemical Corp., Irvine, CA); polycarbonate diols such as DURACARB^{™} 120, a hexanediol carbonate with Mₙ = 900 (available from PPG Industries, Inc., Pittsburgh, PA); and mixtures thereof.

Useful non-fluorinated polyols include 2,2-bis(hydroxymethyl)propionic acid; N,N-bis(2-hydroxyethyl)-3-aminopropyltriethoxysilane; bicine; 3,5-dihydroxybenzoic acid; 2,4-dihydroxybenzoic acid; 1,2-ethanediol; 1,2- and 1,3-propanediol; 1,3-butanediol; 1,4-butanediol; neopentylglycol; 1,5-pentanediol; 3-methyl-1,5-pentanediol; 1,2-hexandiol; 1,5-hexanediol; 1,6-hexanediol; bis(hydroxymethyl)cyclohexane; 1,8-octanediol; 1,10-decanediol; di(ethylene glycol); tri(ethylene glycol); tetra(ethylene glycol); di(propylene glycol); di(isopropylene glycol); tri(propylene glycol); poly(ethylene glycol) diols (number average molecular weight of 200 to 1500); poly(di(ethylene glycol) phthalate) diol (having number average molecular weights of, for example, 350 or 575); poly(propylene glycols) diols (number average molecular weight of 200 to 500); block copolymers of poly(ethylene glycol) and poly(propylene glycol) such as PLURONIC^{™} L31 (available from BASF Corporation, Mount Olive, NJ); polydimethylsiloxane diol; polycaprolactone diols (number average molecular weight of 200 to 600); resorcinol; hydroquinone; 1,6-dihydroxynaphthalene; 2,5-dihydroxynaphthalene; 2,6-dihydroxynaphthalene; 2,7-dihydroxynaphthalene; 4,4'-biphenol; bisphenol A; bis(4-hydroxyphenyl)methane; and mixtures thereof.

More preferred polyols include bis(hydroxymethyl)propionic acid; bicine; N-bis(2-hydroxyethyl)perfluorobutylsulfonamide; 1,2-ethanediol; 1,2-propanediola; 1,3-propanediol; 1,4-butanediol; neopentylglycol; 1,2-hexanediol; 1,6-hexanediol; di(ethylene glycol); tri(ethylene glycol); 1,4-bis(1-hydroxy-1,1-dihydroperfluoropropoxy)perfluoro-n-butane (HOCH₂CF₂CF₂O(CF₂)₄OCF₂CF₂CH₂OH); fluorinated oxetane polyols made by the ring-opening polymerization of fluorinated oxetane such as POLY-3-FOX^{™} (available from Omnova Solutions, Inc., Akron Ohio); poly(di(ethylene glycol) phthalate) diol (having number average molecular weights of, for example, 350 or 575); poly(ethylene glycol) diols (having number average molecular weights of, for example, about 200, 300, 400); polydimethylsiloxane diol; polypropylene glycol (having a number average molecular weight of, for example, 425); dimer diol; polycaprolactone diol (having a number average molecular weight of, for example, 530); 3,5-dihydroxybenzene; bisphenol A; resorcinol; hydroquinone; and mixtures thereof.

The polyol may further be selected from fluorinated polyols.

Representative examples of suitable fluorinated polyols include R_{f}SO₂N(CH₂CH₂OH)₂ such as N-bis(2-hydroxyethyl)perfluorobutylsulfonamide; R_{f} OC₆H₄SO₂N(CH₂CH₂OH)₂; RfSO₂N(R')CH₂CH(OH)CH₂OH such as C₆F₁₃SO₂N(C₃H₇)CH₂CH(OH)CH₂OH; R_{f}CH₂ CON(CH₂CH₂OH)₂; R_{f}CON(CH ₂CH₂OH)₂; CF₃CF₂ (OCF₂CF₂)₃OCF₂CON(CH₃)CH₂CH(OH)CH₂OH; R_{f}OCH₂ CH(OH)CH₂OH such as C₄F₉OCH₂ CH(OH)CH₂OH; R_{f}CH₂CH₂SC ₃H₆OCH₂CH(OH)CH₂OH; R_{f}CH₂CH₂SC₃H₆CH(CH₂OH)₂; R_{f}CH₂CH₂SCH₂ CH(OH)CH₂OH; R_{f}CH₂CH₂ SCH(CH₂OH)CH₂CH₂OH; R_{f}H ₂CH₂CH₂SCH₂CH(OH)CH₂OH such as C₅F₁₁(CH₂)₃SCH₂CH(OH)CH₂OH; R_{f}CH₂CH₂ CH₂OCH₂CH(OH)CH₂OH such as C₅F₁₁(CH₂)₃OCH₂CH(OH)CH₂OH; R_{f}CH₂CH₂CH₂OC₂H₄OCH₂CH(OH)CH₂OH; R_{f}CH₂CH₂(CH₃)OCH₂CH(OH)CH ₂OH; R_{f}(CH₂)₄SC₃H₆CH(CH₂OH)CH₂OH; R_{f}(CH₂)₄SCH₂CH(CH₂OH)₂; R_{f} (CH₂)₄SC₃H₆OCH₂ CH(OH)CH₂OH; R_{f}CH₂CH(C₄H₉)SCH₂CH(OH)CH₂OH; R_{f}CH₂ OCH₂CH(OH)CH₂OH; R_{f}CH₂CH(OH) CH₂SCH₂CH₂OH; R_{f}CH₂ CH(OH)CH₂SCH₂CH₂OH; R_{f}CH₂CH(OH)CH₂OCH₂CH₂OH; R_{f} CH₂CH(OH)CH₂OH; R_{f}R"SCH(R"'OH)CH(R"'OH) SR"R_{f}, (R_{f}CH₂CH₂SCH ₂CH₂SCH₂)₂C(CH₂OH)₂; ((CF₃)₂CFO(CF₂)₂ (CH₂)₂SCH₂)₂C(CH₂OH)₂; (R_{f}R"SCH₂)₂C(CH₂OH)₂; 1,4-bis(1-hydroxy-1,1-dihydroperfluoroethoxyethoxy)perfluoro-n-butane (HOCH₂CF₂OC₂F₄O(CF₂)₄OC ₂F₄OCF₂CH₂OH); 1,4-bis(1-hydroxy-1, 1-dihydroperfluoropropoxy)perfluoro-n-butane (HOCH₂CF₂CF₂O(CF₂)₄OCF₂CF₂CH₂OH); fluorinated oxetane polyols made by the ring- opening polymerization of fluorinated oxetane such as Poly-3-Fox^{tm} (available from Omnova Solutions, Inc., Akron Ohio); polyetheralcohols prepared by ring opening addition polymerization of a fluorinated organic group substituted epoxide with a compound containing at least two hydroxyl groups as described in U.S. Pat. No. 4,508,916 (Newell et al); and perfluoropolyether diols such as Fomblin^{™} ZDOL (HOCH₂CF₂O(CF₂O)₈₋₁₂(CF₂CF₂O)₈₋₁₂CF₂CH₂OH, available from Ausimont); wherein R_{f} is a perfluoroalkyl group having 1 to 12 carbon atoms, or a perfluoroheteroalkyl group having 3 to 50 carbon atoms with all perfluorocarbon chains present having 6 or fewer carbon atoms, or mixtures thereof; R' is alkyl of 1 to 4 carbon atoms; R" is branched or straight chain alkylene of 1 to 12 carbon atoms, alkylenethio-alkylene of 2 to 12 carbon atoms, alkylene-oxyalkylene of 2 to 12 carbon atoms, or alkylene iminoalkylene of 2 to 12 carbon atoms, where the nitrogen atom contains as a third substituent hydrogen or alkyl of 1 to 6 carbon atoms; and R'" is a straight or branched chain alkylene of 1 to 12 carbon atoms or an alkylene-polyoxyalkylene of formula CᵣH₂ᵣ(OC_{S}H_{2S})n where r is 1-12, s is 2-6, and t is 1-40.

Preferred fluorinated polyols include N-bis(2-hydroxyethyl) perfluorobutylsulfonamide; fluorinated oxetane polyols made by the ring- opening polymerization of fluorinated oxetane such as Poly-3-Fox« (available from Omnova Solutions, Inc., Akron Ohio); polyetheralcohols prepared by ring opening addition polymerization of a fluorinated organic group substituted epoxide with a compound containing at least two hydroxyl groups as described in U.S. Pat. No. 4,508,916 (Newell et al); perfluoropolyether diols such as Fomblin ZDOL (HOCH₂CF₂O(CF₂O)₈-₁₂(CF₂CF₂O)₈₋₁₂CF₂CH₂OH, available from Ausimont); 1,4-bis(1-hydroxy-1,1-dihydroperfluoroethoxyethoxy)perfluoro -n-butane (HOCH₂CF₂OC₂F₄O(CF₂ )₄OC₂F₄OCF₂CH₂OH); and 1,4-bis(1-hydroxy-1,1-dihydroperfluoropropoxy)perfluoro-n-butane (HOCH₂CF₂CF₂O(CF₂)₄ OCF₂CF₂CH₂OH).

More preferred polyols comprised of at least one fluorine- containing group include N-bis(2-hydroxyethyl)perfluorobutylsulfonamide; 1,4-bis(1-hydroxy-1,1-dihydroperfluoropropoxy)perfluoro-n-butane (HOCH₂CF₂CF₂O(CF₂)₄ OCF₂CF₂CH₂OH).

Fluorochemical monoalcohols suitable for use in preparing additives of the present invention include those that comprise at least one R_{f} group. The R_{f} groups can contain straight-chain, branched-chain, or cyclic fluorinated alkylene groups or any combination thereof. The R_{f} groups can optionally contain one or more heteroatoms (for example, oxygen, sulfur, and/or nitrogen) in the carbon-carbon chain so as to form a carbon-heteroatom-carbon chain (that is, a heteroalkylene group). Fully-fluorinated groups are generally preferred, but hydrogen or chlorine atoms can also be present as substituents, provided that no more than one atom of either is present for every two carbon atoms. It is additionally preferred that any R_{f} group contain at least 40% fluorine by weight, more preferably at least 50% fluorine by weight. The terminal portion of the group is generally fully-fluorinated, preferably containing at least three fluorine atoms (for example, Cr₃O-, CF₃CF₂-, CF₃CF₂CF₂-, (CF₃)₂N-, (CF₃)₂CF-, or SF₅CF₂-). Perfluorinated aliphatic groups (that is, those of the formula CₙF₂ₙ₊₁-) wherein n is 2 to 6 inclusive are the preferred R_{f} groups, with n = 3 to 5 being more preferred and with n = 4 being the most preferred.

Useful fluorine-containing monoalcohols include compounds of the following formula:

R_{f}-Z-R²-OH

wherein:
R_{f} is a perfluoroalkyl group or a perfluoroheteroalkyl group as defined above;
Z is a connecting group selected from a covalent bond, a sulfonamido group, a carboxamido group, a carboxyl group, or a sulfinyl group; and
R² is a divalent straight- or branched-chain alkylene, cycloalkylene, or heteroalkylene group of 1 to 14 carb, 1 to 4 carbon atoms; most preferably, 2 carbon atoms).

Representative examples of useful fluorine-containing monoalcohols include the following:
CF₃(CF₂)₃SO₂N(CH₃)CH₂CH₂OH,
CF₃(CF₂)₃SO₂N(CH₃)CH(CH₃)CH₂OH,
CF₃(CF₂)₃SO₂N(CH₃)CH₂CH(CH₃)OH,
CF₃(CF₂)₃SO₂N(CH₂CH₃)CH₂CH₂OH,
CF₃(CF₂)₃SO₂N(CH₃)CH₂CH₂SCH₂CH₂OH,
C₆F₁₃SO₂N(CH₃)(CH₂)₄OH,
CF₃(CF₂)₇SO₂N(H)(CH₂)₃OH,
C₈F₁₇SO₂N(CH₃)CH₂CH₂OH,
CF₃(CF₂)₇SO₂N(CH₃)(CH₂)₄OH,
C₈F₁₇SO₂N(CH₃)(CH₂)₁₁OH,
CF₃(CF₂)₇SO₂N(CH₂CH₃)CH₂CH₂OH,
CF₃(CF₂)₇SO₂N(C₂H₅)(CH₂)₆OH,
CF₃(CF₂)₇SO₂N(C₂H₅)(CH₂)₁ OH,
CF₃(CF₂)₆SO₂N(C₃H₇)CH₂OCH₂CH₂CH₂OH,
CF₃(CF₂)₇SO₂N(CH₂CH₂CH₃)CH₂CH₂OH,
CF₃(CF₂)₉SO₂N(CH₂CH₂CH₃)CH₂CH₂OH,
CF₃(CF₂)₇SO₂N(C₄H₉)CH₂CH₂OH,
CF₃(CF₂)₇SO₂N(C₄H₉)(CH₂)₄OH,
2-(N-methyl-2-(4-perfluoro-(2,6-diethylmorpholinyl))perfluoroethylsulfonamido)ethanol,
C₃F₇CONHCH₂CH₂OH,
C₇F₁₅CON(CH₃)CH₂CH₂OH,
C₇F₁₅CON(C₂H₅)CH₂CH₂OH,
C₈F₁₇CON(C₂H₅)CH₂CH₂OH,
C₈F₁₇CON(CH₃)(CH₂)₁₁OH,
C₄F₉CF(CF₃)CON(H)CH₂CH₂OH
C₆F₁₃CF(CF₃)CON(H)CH₂CH₂OH
C₇F₁₅CF(CF₃)CON(H)CH₂CH₂OH
C₂F₅O(C₂F₄O)₃CF₂CONHC₂H₄OH,
CF₃O(CF(CF₃)CF₂O)₁₋₃₆CF(CF₃)CH₂OH,
C₂F₅O(CF(CF₃)CF₂O)₁₋₃₆CF(CF₃)CH₂OH,
C₃F₇O(CF(CF₃)CF₂O)₁₋₃₆CF(CF₃)CH₂OH,
C₄F₉O(CF(CF₃)CF₂O)₁₋₃₆CF(CF₃)CH₂OH,
C₃F₇O(CF(CF₃)CF₂O)₁₂CF(CF₃)CH₂OH,
CF₃O(CF₂CF₂O)₁₋₃₆CF₂CH₂OH,
C₂F₅O(CF₂CF₂O)₁₋₃₆CF₂CH₂OH,
C₃F₇O(CF₂CF₂O)₁₋₃₆CF₂CH₂OH,
C₄F₉O(CF₂CF₂O)₁₋₃₆CF₂CH₂OH,
n-C₄F₉OC₂F₄OCF₂CH₂OCH₂CH₂OH
CF₃O(CF₂CF₂O)₁₁CF₂CH₂OH,
CF₃CF(CF₂Cl)(CF₂CF₂)₆CF₂CON(CH₃)CH₂CH₂OH,
CF₃(CF₂)₆SO₂CH₂CH₂OH,
CF₃(CF₂)₇SO₂CH₂CH₂OH,
C₅F₁₁COOCH₂CH₂OH,
CF₃(CF₂)₆COOCH₂CH₂OH,
C₆F₁₃CF(CF₃)COOCH₂CH₂CH(CH₃)OH
C₈F₁₇COOCH₂CH₂OH,
C₈F₁₇(CH₂)₁₁N(C₂H₅)CH₂CH₂OH,
C₃F₇CH₂OH,
CF₃(CF₂)₆CH₂OH,
Perfluoro(cyclohexyl)methanol
C₄F₉CH₂CH₂OH,
CF₃(CF₂)₅CH₂CH₂OH
CF₃(CF₂)₆CH₂CH₂CH₂OH,
CF₃(CF₂)₇CH₂CH₂OH,
CF₃(CF₂)₇CH₂CH₂SO₂N(CH₃)CH₂CH₂OH,
CF₃(CF₂)₅CH₂CH₂SO₂N(CH₃)CH₂CH₂OH,
CF₃(CF₂)₃CH₂CH₂SO₂N(CH₃)CH₂CH₂OH,
CF₃(CF₂)₇CH₂CH₂CH₂OH,
CF₃CF(CF₂H)(CF₂)₁₀(CH₂)₂OH,
CF₃CF(CF₂Cl)(CF₂)₁₀(CH₂)₂OH,
R_{f}(CH₂)₂S(CH₂)₂OH,
C₄F₉(CH₂)₂S(CH₂)₂OH,
R_{f}(CH₂)₄S(CH₂)₂OH,
R_{f}(CH₂)₂S(CH₂)₃OH,
R_{f}(CH₂)₂SCH(CH₃)CH₂OH,
R_{f}(CH₂)₄SCH(CH₃)CH₂OH,
R_{f}CH₂CH(CH₃)S(CH₂)₂OH,
R_{f}(CH₂)₂S(CH₂)₁₁OH,
R_{f}(CH₂)₂S(CH₂)₃O(CH₂)₂OH,
R_{f}(CH₂)₃O(CH₂)₂OH,
R_{f}(CH₂)₃SCH(CH₃)CH₂OH,
and mixtures thereof, wherein R_{f} is a perfluoroalkyl group of 2 to 16 carbon atoms. If desired, rather than using such alcohols, similar thiols can be utilized.

Preferred fluorine-containing monoalcohols include 2-(N-methylperfluorobutanesulfonamido)ethanol, 2-(N-ethylperfluorobutanesulfonamido)ethanol, 2-(N-methylperfluorobutanesulfonamido)propanol, N-methyl-N-(4-hydroxybutyl)perfluorohexanesulfonamide, 1,1,2,2- tetrahydroperfluorooctanol, C₄F₉OC₂F₄OCF₂CH₂OCH₂CH₂OH, C₃F₇CON(H)CH₂CH₂OH, C₃F₇O(CF(CF₃)CF₂O)₁₋₃₆CF(CF₃)CH₂OH, CF₃O(CF₂CF₂O)₁₋₃₆CF₂CH₂OH, and mixtures thereof.

Silane compounds suitable for use in the chemical compositions of the present invention are those of the following formula:

X-R¹-Si-(Y)₃

wherein X, R¹, and Y are as defined previously. Therefore, these silane compounds contain one, two, or three hydrolyzable groups (Y) on the silicon and one organic group including an isocyanate-reactive or an active hydrogen reactive radical (X-R¹). Any of the conventional hydrolyzable groups, such as those selected from the group consisting of alkoxy, acyloxy, heteroalkoxy, heteroacyloxy, halo, oxime, can be used as the hydrolyzable group (Y). The hydrolyzable group (Y) is preferably alkoxy or acyloxy and more preferably alkoxy.

When Y is halo, the hydrogen halide liberated from the halogen-containing silane can cause polymer degradation when cellulose substrates are used. When Y is an oxime group, lower oxime groups of the formula -N=CR⁵R⁶, wherein R⁵ and R⁶ are monovalent lower alkyl groups comprising 1 to 12 carbon atoms, which can be the same or different, preferably selected from the group consisting of methyl, ethyl, propyl, and butyl, are preferred.

Representative divalent bridging radicals (R¹) include, for example, those selected from the group consisting of -CH₂CH₂-, -CH₂CH₂CH₂-, -CH₂CH₂CH₂OCH₂CH₂-, -CH₂CH₂C₆H₄CH₂CH₂-, and -CH₂CH₂O(C₂H₄O)₂CH₂CH₂N(CH₃)CH₂CH₂CH₂-.

Other preferred silane compounds are those which contain one or two hydrolyzable groups, such as those having the structures R²OSi(R⁷)₂R¹XH and (R⁸O)₂Si(R⁷)R¹XH, wherein R¹ is as previously defined, and R⁷ and R⁸ are selected from the group consisting of a phenyl group, an alicycylic group, or a straight or branched aliphatic group having from 1 to 12 carbon atoms. Preferably, R⁷ and R⁸ are a lower alkyl group comprising 1 to 4 carbon atoms.

Following the hydrolysis of some of these terminal silyl groups, inter-reaction with a substrate surface comprising -SiOH groups or other metal hydroxide groups to form siloxane or metal-oxane linkages, for example, 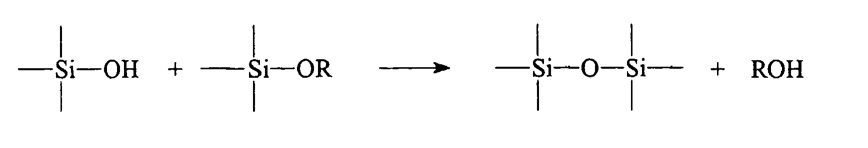 can occur. Bonds thus formed, particularly Si-O-Si bonds, are water resistant and can provide enhanced durability of the stain-release properties imparted by the chemical compositions of the present invention.

Such silane compounds are well known in the art and many are commercially available or are readily prepared. Representative isocyanate-reactive silane compounds include, for example:
H₂NCH₂CH₂CH₂Si(OC₂H₅)₃,
H₂NCH₂CH₂CH₂Si(OCH₃)₃,
H₂NCH₂CH₂CH₂Si(O-N=C(CH₃)(C₂H₅))₃
HSCH₂CH₂CH₂Si(OCH₃)₃,
HO(C₂H₄O)₃C₂H₄N(CH₃)(CH₂)₃Si(OC₄H₉)₃,
H₂NCH₂C₆H₄CH₂CH₂Si(OCH₃)₃,
HSCH₂CH₂CH₂Si(OCOCH₃)₃,
HN(CH₃)CH₂CH₂Si(OCH₃)₃,
HSCH₂CH₂CH₂SiCH₃(OCH₃)₂,
(H₃CO)₃SiCH₂CH₂CH₂NHCH₂CH₂CH₂Si(OCH₃)₃,
HN(CH₃)C₃H₆Si(OCH₃)₃,
CH₃CH₂OOCCH₂CH(COOCH₂CH₃)HNC₃H₆Si(OCH₂CH₃)₃,
C₆H₅NHC₃H₆Si(OCH₃)₃,
H₂NC₃H₆SiCH₃(OCH₂CH₃)₂,
HOCH(CH₃)CH₂OCONHC₃H₆Si(OCH₂CH₃)₃,
(HOCH₂CH₂)₂NCH₂CH₂CH₂Si(OCH₂CH₃)₃,
and mixtures thereof.

Representative examples of hydroxyl-reactive silane compounds include, for example, 3-isocyanatopropyltriethoxysilane, 3-isocyanatopropyltrimethoxysilane.

An illustrative fluorochemical urethane which may be used in additives of the present invention is a water-borne dispersion comprising:

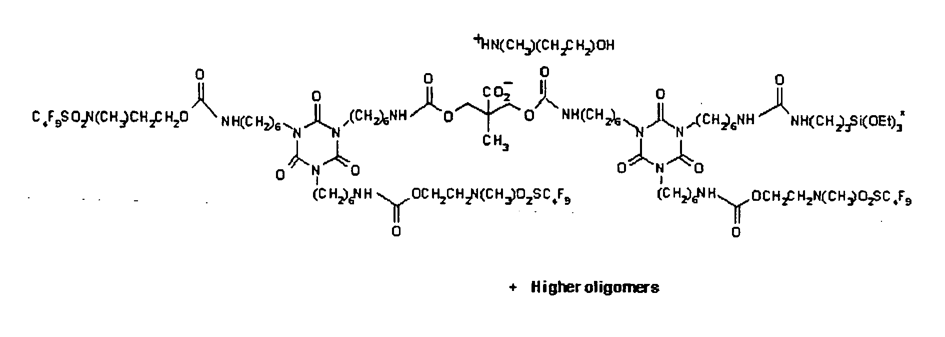

Optionally additives of the invention may further comprise stabilizers including, for example, ultraviolet (UV) absorbers and hindered amine light stabilizers that comprise isocyanate-reactive groups that enable covalent incorporation into the polyurethane. Such reactable stabilizers can comprise, for example, one or more isocyanate-reactive groups such as amine, hydroxyl or similar groups. Preferably, the reactable stabilizers comprise hydroxyl groups.

Some examples of UV absorbers that are suitable for use in the present invention protect the composition by absorbing radiation in the range of 270 - 500 nanometers and releasing the energy into the environment through non-destructive means. Suitable UV absorbers include, for example, isocyanate-reactable cinnamate esters, hydroxybenzophenones, benzotriazoles, substituted acrylates, salicylates, oxanilides, hydroxyphenyltriazines.

Representative examples of suitable reactable UV absorbers include 2-amino-5-chlorobenzophenone, 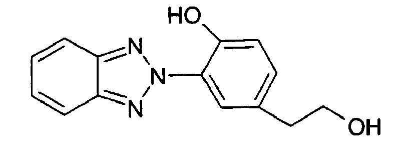 Tinuvin^{™} R-600, 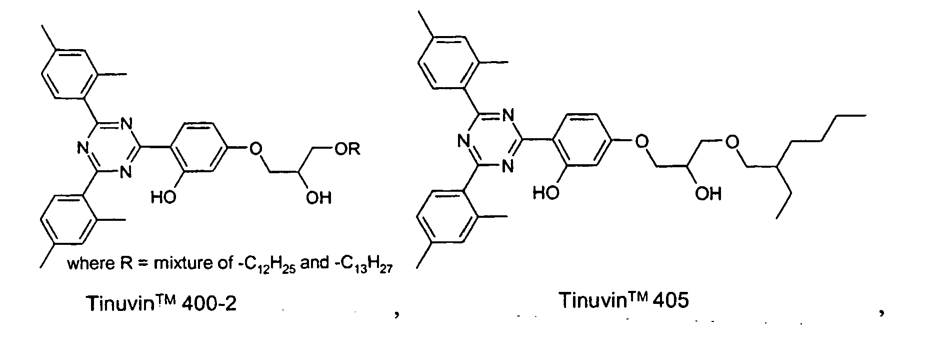 and Tinuvin^{™} 1130: 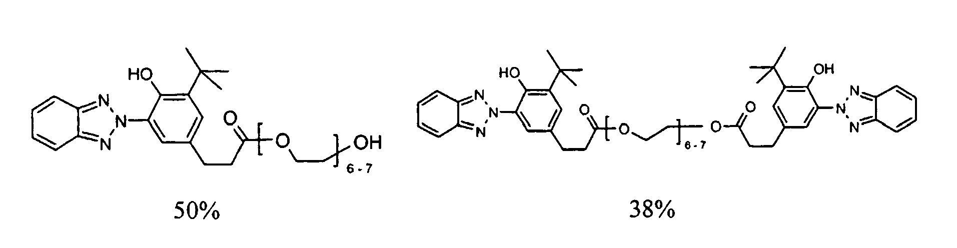 H(OCH₂CH₂)₆₋₇OH, 12%.

Preferred UV absorbers include, for example, Tinuvin^{™} 405 and Tinuvin^{™} 1130.

Hindered amine light stabilizers (HALS) function by inhibiting degradation of the binder in grout coatings, which has already formed free radicals. An example of a suitable
reactable HALS is

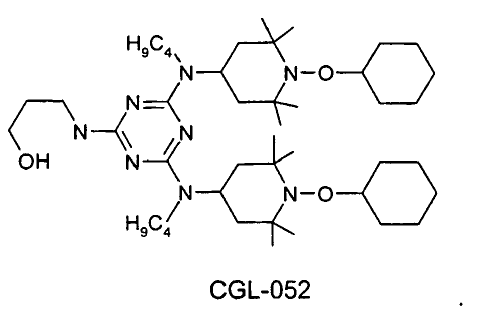

Antioxidants and thermal stabilizers can optionally be included in additives of the invention. Antioxidants and thermal stabilizers can help minimize the degradative effects of thermal, photoinduced, and auto-catalytic degradation processes. Suitable antioxidant and/or thermal stabilizers include, for example, sterically hindered phenols, bisphenols, aminophenols, secondary aromatic amines, hydroxybenzyl compounds, alkyl and arylthioethers, thiobisphenols, phosphates and phosphonites, zinc-thiocarbamates, benzofuranone lactone-based antioxidants, nickel quenchers, metal deactivators or complexing agents.

Additives of the invention can optionally contain water-solubilizing compounds (W-R¹-X) comprising one or more water-solubilizing groups and at least one isocyanate-reactive group. These water-solubilizing compounds include, for example, diols and monoalcohols comprising one or more water-solubilizing groups, added in addition to the one or more polyols and one or more monoalcohols as described above.

The solubilizing groups of the water-solubilizing compounds include, for example, carboxylate, sulfate, sulfonate, phosphate, phosphonate, ammonium, and quaternary ammonium groups. Such groups can be represented as -CO₂M, -OSO₃M, -SO₃M,-OPO₃M, -PO(OM)₂, -NR₂HX, -NR₃X, -NRH₂X, and -NH₃X, respectively, wherein M is H or one equivalent of a monovalent or divalent soluble cation such as sodium, potassium, calcium, and NR₃H⁺; X is a soluble anion such as those selected from the group consisting of halide, hydroxide, carboxylate, sulfonates ; and R is selected from the group consisting of a phenyl group, a cycloaliphatic group, or a straight or branched aliphatic group having from 1 to 12 carbon atoms. Preferably, R is a lower alkyl group having from 1 to 4 carbon atoms. The group -NR₃X is a salt of a water-soluble acid, for example trimethyl ammonium chloride, pyridinium sulfate or an ammonium substituent. The group -NR₂HX is the salt of a water-soluble acid, such as dimethyl ammonium acetate or propionate. The group -NRH₂X is the salt of a water-soluble acid, such as methyl ammonium acetate or propionate. The group -NH₃X is the salt of a water-soluble acid, such as ammonium acetate or propionate. The salt form can be made by simple neutralization of the acid group with a base such as an amine, a quaternary ammonium hydroxide, an alkali metal carbonate or hydroxide; or alternatively by simple reaction of the amino group with a carboxylic acid, a sulfonic acid, a halo acid. Carboxylic acid groups in salt form are preferred because they have been found to impart water solubility to the chemical compositions of the present invention without causing undue loss of the durable stain-release properties imparted by the chemical composition.

The isocyanate-reactive hydrogen containing group is selected from the group consisting of -OH, -SH, NH₂, and NRH wherein R is selected from the group consisting of a phenyl group, a cycloaliphatic group, or a straight or branched aliphatic group having from 1 to 12 carbon atoms. Preferably, R is a lower alkyl group having from 1 to 4 carbon atoms. A representative suitable diol with a solubilizing group is 2,2-bis(hydroxymethyl)propionic acid and its salts such as its ammonium salt. A representative suitable monoalcohol with a solubilizing group is glycolic acid (HOCH₂COOH) and its salts. The amount of water-solubilizing group should be sufficient to solubilize the chemical composition.

Typically, the isocyanate:solubilizing group ratio should be from 3:1 to 16:1, preferably from 5:1 to 11:1. Illustrative water-solubilizing compounds having suitable water-solubilizing groups include, but are not limited to, those independently selected from the group consisting of HOCH₂COOH; HSCH₂COOH; (HOCH₂CH₂)₂NCH₂COOH; HOC(CO₂H)(CH₂CO₂H)₂; (H₂N(CH₂)ₙCH₂)₂NCH₃ wherein n is an integer of 1 to 3; (HOCH₂)₂C(CH₃)COOH; (HO(CH₂)ₙCH₂)₂NCH₃ wherein n is an integer of 1 to 3; HOCH₂CH(OH)CO₂Na; N-(2-hydroxyethyl)iminodiacetic acid (HOCH₂CH₂N(CH₂COOH)₂); L-glutamic acid (H₂NCH(COOH)(CH₂CH₂COOH)); aspartic acid (H₂NCH(COOH)(CH₂COOH)); glycine (H₂NCH₂COOH); 1,3-diamino-2-propanol-N,N,N',N'-tetraacetic acid (HOCH(CH₂N(CH₂COOH)₂)₂); iminodiacetic acid (HN(CH₂COOH)₂); mercaptosuccinic acid (HSCH(COOH)(CH₂COOH)); H₂N(CH₂)₄CH(COOH)N(CH₂COOH)₂; HOCH(COOH)CH(COOH)CH₂COOH; (HOCH₂)₂CHCH₂COO)⁻(NH(CH₃)₃)⁺; CH₃(CH₂)₂CH(OH)CH(OH)(CH₂)₃CO₂K; H₂NCH₂CH₂OSO₃Na; H₂NC₂H₄NHC₂H₄SO₃H; H₂NC₃H₆NH(CH₃)C₃H₆SO₃H; (HOC₂H₄)₂NC₃H₆OSO₃Na; (HOCH₂CH₂)₂NC₆H₄OCH₂CH₂OSO₂OH; N-methyl-4-(2,3-dihydroxypropoxy)pyridinium chloride, ((H₂N)₂C₆H₃SO₃)⁻(NH(C₂H₅)₃)⁺; dihydroxybenzoic acid; 3,4-dihydroxybenzylic acid; 3-(3,5-dihydroxyphenyl)propionic acid; salts of the above amines, carboxylic acids, and sulfonic acids; and mixtures thereof.

Additives of the present invention can be made according to the following stepwise synthesis. As one skilled in the art would understand, the order of the steps is nonlimiting and can be modified so as to produce a desired chemical composition. In the synthesis, the polyfunctional isocyanate compound, the reactable stabilizers, and the polyol are dissolved together under dry conditions, preferably in a solvent, and then heating the resulting solution at approximately 40 to 80 °C (preferably, approximately 60 to 70 °C) with mixing in the presence of a catalyst for one-half to two hours, preferably one hour.

Depending on reaction conditions (for example, reaction temperature and/or polyfunctional isocyanate used), a catalyst level of up to 0.5 percent by weight of the polyfunctional isocyanate/polyol/stabilizer mixture may be used, but typically 0.00005 to 0.5 percent by weight is required, 0.02 to 0.1 percent by weight being preferred. Suitable catalysts include, but are not limited to, tertiary amine and tin compounds. Examples of useful tin compounds include tin II and tin IV salts such as stannous octoate, dibutyltin dilaurate, dibutyltin diacetate, dibutyltin di-2-ethylhexanoate, and dibutyltinoxide. Examples of useful tertiary amine compounds include triethylamine, tributylamine, triethylenediamine, tripropylamine, bis(dimethylaminoethyl) ether, morpholine compounds such as ethyl morpholine, and 2,2'-dimorpholinodiethyl ether, 1,4-diazabicyclo[2.2.2]octane (DABCO, Sigma-Aldrich Chemical Co., Milwaukee, WI), and 1,8-diazabicyclo[5.4.0.]undec-7-ene (DBU, Sigma-Aldrich Chemical Co., Milwaukee, WI). Tin compounds are preferred.

A mixture of polyols can be used instead of a single polyol. For example, in a preferred embodiment a polyol mixture comprising a polyol with a water-solubilizing group and a polyol with an R_{f} group is used. When the polyfunctional isocyanate compound is a triisocyanate, the polyol is preferably a diol to prevent undesired gelation, which can occur when polyols having three or more hydroxyl groups are reacted with a triisocyanate.

The resulting isocyanate functional urethane oligomers and compounds are then further reacted with one or more of the monoalcohols described above, along with the reactive stabilizers, if desired. The monoalcohol(s) is (are) added to the above reaction mixture, and react(s) with a substantial portion of the remaining NCO groups. The above temperatures, dry conditions, and mixing are continued one-half to two hours (preferably, one hour). Terminal fluorine-containing and/or long-chain hydrocarbon groups and stabilizer moieties are thereby bonded to the isocyanate functional urethane oligomers and compounds.

These oligomers and compounds are further functionalized with silane groups described above by reacting a portion or all of the remaining NCO groups in the resulting mixture with one or more of the isocyanate-reactive silane compounds described above. Thus, the silane compound(s) is (are) added to the reaction mixture, using the same conditions as with the previous additions. Aminosilanes are preferred, because of the rapid and complete reaction that occurs between the -NCO groups and the silane compound's amino groups. Isocyanato functional silane compounds may be used and are preferred when the ratio of polyfunctional isocyanate compound to the polyol and monoalcohol is such that the resulting oligomer has a terminal hydroxyl group.

Water-solubilizing compounds can be added and reacted with all or a portion of the -NCO groups under the conditions described above in any of the steps described above. For example, as mentioned above, the water-solubilizing compound can be added as a mixture with the polyol. Alternatively, the water-solubilizing compound can be added after reaction of the polyol with the polyfunctional isocyanate, as a mixture with the monoalcohol(s), after reaction of the polyol and monoalcohol with the polyfunctional isocyanate, as a mixture with the silane, or after the reaction of the polyol, monoalcohol, and silane with the polyfunctional isocyanate.

When the water-solubilizing compound is a monoalcohol, it is preferably added as a mixture with the fluorine-containing monoalcohol or the long-chain hydrocarbon monoalcohol. When the water-solubilizing compound is a diol, it is preferably added as a mixture with the polyol.

When the chemical composition of the present invention contains a urethane oligomer having one or more carboxylic acid groups, solubility of the composition in water can be further increased by forming a salt of the carboxylic acid group(s). Basic salt-forming compounds, such as tertiary amines, quaternary ammonium hydroxides, and inorganic bases, including, for example, those selected from the group consisting of sodium hydroxide, potassium hydroxide, cesium hydroxide, lithium hydroxide, calcium hydroxide, magnesium hydroxide, zinc hydroxide, and barium hydroxide, can be used in a sufficient amount (that is, in an amount to maintain a pH of greater than 6). These basic salt-forming compounds preferably can be added in the water phase, but optionally in the preparation of the urethane oligomers, to form salts with the incorporated, pendant and/or terminal carboxylic acid groups on the urethane oligomer.

Examples of useful amine salt-forming compounds include, for example, those selected from the group consisting of ammonia, trimethylamine, triethylamine, tripropylamine, triisopropylamine, tributylamine, triethanolamine, diethanolamine, methyldiethanolamine, morpholine, N-methylmorpholine, dimethylethanolamine, and mixtures thereof.

Preferred salt forming compounds include, for example, those selected from the group consisting of ammonia, trimethylamine, dimethylethanolamine, methyldiethanolamine, triethylamine, tripropylamine, and triisopropylamine, since the chemical compositions prepared therefrom are not excessively hydrophilic upon coating and curing.

Because certain salts formed by the reaction of salt forming compounds, such as potassium hydroxide in combination with a carboxylic acid group, could result in undesired reaction with NCO groups, it is preferred to add the salt forming compound in a water phase after all of the diols, alcohol, and silane compounds have been reacted with the NCO groups of the polyfunctional isocyanate compound.

The molar ratios of the components of additives of the present invention are approximately as follows:
one or more polyfunctional isocyanate compounds and one or more polyols are used in a molar ratio of from 1:0.25 to 1:0.45;
one or more polyfunctional isocyanate compounds and one or more monoalcohols are used in a molar ratio of from 1:0.30 to 1:0.60;
one or more polyfunctional isocyanate compounds and one or more silanes are used in a molar ratio of from 1:0.001 to 1:0.15;
one or more polyfunctional isocyanate compounds and one or more stabilizers are used in a molar ratio of from 1:0.001 to 1:0.1; and
one or more polyfunctional isocyanate compounds and one or more water-solubilizing compounds are used in a molar ratio of from 1:0 to 1:1.6.

The molar ratios of the components of additives of the present invention are preferably as follows:
one or more polyfunctional isocyanate compounds and one or more polyols are used in a molar ratio of from 1:0.35 to 1:0.42;
one or more polyfunctional isocyanate compounds and one or more monoalcohols are used in a molar ratio of from 1:0.45 to 1:0.55;
one or more polyfunctional isocyanate compounds and one or more silanes are used in a molar ratio of from 1:0.03 to 1:0.08;
one or more polyfunctional isocyanate compounds and one or more stabilizers are used in a molar ratio of from 1:0.01 to 1:0.05; and
one or more polyfunctional isocyanate compounds and one or more water-solubilizing compounds are used in a molar ratio of from 1:0 to 1:1.0.

### Other Ingredients

Polymeric grouts contain a polymeric resin material and filler. Illustrative examples include epoxy-containing resins and acrylate-containing resins. Illustrative examples of fillers include particles of silica sand, limestone, titanium dioxide, talc.

Illustrative examples of polymeric grouts are disclosed in U.S. Patent Nos. 4,616,050, 4,472,540, and 3,859,233.

### Mixing

Grout compositions of the invention can be readily made by mixing additives as described herein with the other component materials of the polymeric grout by any suitable means.

Polymeric grout compositions of the invention typically contain from 0.01 to 1 weight percent of the additive based on a dry basis.

Grout compositions of the invention can optionally comprise biocides (for example, mildicides) to inhibit the growth of biological material such as algaes, mildews, and molds on coated substrates. A preferred biocide, for example, is zinc pyridenethione. Additionally, it may be desirable to add surfactants, anti-foam agents, anti-slip particles, and/or colorants (for example, stains, or pigments).

### Applications

Grout compositions of the invention can be used in any of a variety of interior and exterior applications with a variety of tile materials, e.g., ceramic tile, stone for a variety of applications including flooring, pool decks, walls, shower surrounds.

## Claims

1. A polymeric grout composition comprising one or more urethane oligomers of at least two polymerized units, wherein said oligomers comprise the reaction product of:
(a) one or more polyfunctional isocyanate compounds,
(b) one or more polyols,
(c) one or more monoalcohols selected from the group consisting of fluorocarbon monoalcohols, optionally substituted long-chain hydrocarbon monoalcohols, and mixtures thereof; and
(d) one or more silanes of the following formula:
X-R¹-Si - (Y)₃
wherein
X is an isocyanate reactive group selected from -NH₂, -SH, -OH, or -NRH, where R is selected from the group consisting of phenyl, straight and branched aliphatic, alicyclic, and aliphatic ester groups,
R¹ is an alkylene, heteroalkylene, aralkylene, or heteroaralkylene group, and
each Y is independently a hydroxyl, a hydrolyzable moiety selected from the group consisting of alkoxy, acyloxy, heteroalkyoxy, heteroacyloxy, halo, and oxime, or a non-hydrolyzable moiety selected from the group consisting of phenyl, alicyclic, straight-chain aliphatic, and branched-chain aliphatic, wherein at least one Y is a hydrolyzable moiety.

## Patentansprüche

1. Polymere Fugenmörtelmasse, enthaltend ein oder mehrere Urethanoligomere aus mindestens zwei polymerisierten Einheiten, wobei die Oligomere das Umsetzungsprodukt aus:
(a) einem oder mehreren polyfunktionellen Isocyanatverbindungen,
(b) einem oder mehreren Polyolen,
(c) einem oder mehreren Monoalkoholen aus der Gruppe bestehend aus Fluorkohlenstoffmonoalkoholen, gegebenenfalls substituierten langkettigen Kohlenwasserstoffmonoalkoholen und Mischungen davon und
(d) einem oder mehreren Silanen der folgenden Formel:
X-R¹-Si-(Y)₃
worin
X für eine unter -NH₂, -SH, -OH oder -NRH ausgewählte gegenüber Isocyanat reaktive Gruppe steht, wobei R aus der Gruppe bestehend aus Phenyl, geradkettigen und verzweigten Aliphaten, Alicyclen und aliphatischen Estergruppen ausgewählt ist,
R¹ für eine Alkylen-, Heteroalkylen-, Aralkylen- oder Heteroaralkylengruppe steht und
Y jeweils unabhängig voneinander für Hydroxyl, eine hydrolysierbare Einheit aus der Gruppe bestehend aus Alkoxy, Acyloxy, Heteroalkyloxy, Heteroacyloxy, Halogen und Oxim oder eine nicht hydrolysierbare Einheit aus der Gruppe bestehend aus Phenyl, Alicyclen, geradkettigen Aliphaten und verzweigtkettigen Aliphaten steht, umfassen.

## Revendications

1. Composition de coulis polymère comprenant un ou plusieurs oligomères d'uréthane d'au moins deux motifs polymérisés, dans laquelle lesdits oligomères comprennent le produit de réaction de :
(a) un ou plusieurs composés isocyanate poly-fonctionnels,
(b) un ou plusieurs polyols,
(c) un ou plusieurs monoalcools choisis parmi le groupe constitué de monoalcools fluoro-carbonés, de monoalcools hydrocarbonés à longue chaîne, éventuellement substitués, et de leurs mélanges, et
(d) un ou plusieurs silanes de formule suivante :
X-R¹- Si-(Y)₃
dans laquelle :
X est un groupe réactif vis-à-vis d'un isocyanate choisi parmi un groupe -NH₂, un groupe -SH, un groupe -OH ou un groupe -NRH, où R est choisi parmi le groupe constitué d'un groupe phényle et de groupes ester aliphatiques, alicycliques et aliphatiques linéaires et ramifiés,
R¹ est un groupe alkylène, un groupe hétéro-alkylène, un groupe aralkylène ou un groupe hétéroaralkylène, et
chaque Y est indépendamment un groupe hydroxyle, un fragment hydrolysable choisi parmi le groupe constitué d'un groupe alcoxy, d'un groupe acyloxy, d'un groupe hétéroalcoxy, d'un groupe hétéroacyloxy, d'un groupe halogéno et d'un groupe oxime, ou un fragment non hydrolysable choisi parmi le groupe constitué d'un groupe phényle, d'un groupe alicyclique, d'un groupe aliphatique à chaîne linéaire et d'un groupe aliphatique à chaîne ramifiée, où au moins un Y est un fragment hydrolysable.
